# EUROPÄISCHE PATENTSCHRIFT

(11) **EP 3 028 990 B1**
(45) Veröffentlichungstag und Bekanntmachung des Hinweises auf die Patenterteilung: **02.08.2017**
(21) Anmeldenummer: 14020098.1
(22) Anmeldetag: 01.12.2014
(51) Int. Cl.: C01B 3/04, C01B 21/02

(54) **Verfahren zur Herstellung von Wasserstoff als Brennstoff durch Ammoniakspaltung**
Method for the preparation of hydrogen as a fuel by ammonia cracking
Procédé de fabrication d'hydrogène en tant que combustible par craquage d'ammoniac

(43) Veröffentlichungstag der Anmeldung: 08.06.2016
(73) Patentinhaber: Wannemacher, Gerhard, 64390 Erzhausen (DE)
(72) Erfinder: Wannemacher, Gerhard, 64390 Erzhausen (DE)
(74) Vertreter: Leithe, Eva

(56) Entgegenhaltungen:
- EP-A1- 2 543 103
- FR-A- 1 469 045
- US-A- 3 198 604
- US-A- 3 352 716
- US-A1- 2014 238 316

## Beschreibung

### Gebiet der Erfindung

Die vorliegende Erfindung betrifft ein Verfahren zur Umwandlung von Ammoniak durch Spaltung in ein Gasgemisch von 75 % Wasserstoff und 25 % Stickstoff. Damit wird der in der Praxis kaum als Brennstoff nutzbare Ammoniak in ein leicht brennbares Gas überführt.

### Hintergrund der Erfindung

Ammoniak eignet sich wegen seines Energieinhaltes prinzipiell als Brennstoff, während einige Nachteile dieser Verwendung entgegenstehen. Dazu gehört z.B. die sehr geringe Flammengeschwindigkeit von Ammoniak-Luft-Gemischen, enge Zündgrenzen und hohe Zündenergie. Wegen dieser Nachteile findet Ammoniak in der Praxis als Brennstoff so gut wie keine Verwendung.

Vorteile sind neben der ausreichenden Energiedichte die Speicherbarkeit in flüssiger Form und der daraus resultierende kostengünstige Transport sowie die kohlendioxidfreie Verbrennung.
Ammoniak wird bisher überwiegend aus Erdgas hergestellt, wobei Letzteres als Wasserstoffquelle dient. Eine weitere Möglichkeit zur Herstellung von Wasserstoff besteht in der Elektrolyse von Wasser, wobei anstelle von Erdgas elektrische Energie eingesetzt wird. Wegen der höheren Kosten findet dieses Verfahren bisher kaum Anwendung. Im Zuge der zunehmenden Verbilligung erneuerbarer Energiequellen wie Solarenergie, Wind und Wasserkraft, rückt die Rentabilität dieses Herstellungsverfahrens näher. Weiterhin ist in Zukunft mit der Verknappung von Erdgas und den damit verbundenen höheren Preisrisiken zu rechnen. Bei der Herstellung von Ammoniak mit Hilfe der

Wasserelektrolyse wird letztendlich nur Luft, Wasser und elektrische Energie benötigt, so dass bei Einsatz von erneuerbaren elektrischen Energiequellen die Herstellung und Verwendung von Ammoniak kohlendioxid-neutral bleibt und kein Beitrag zur Klimaerwärmung geleistet wird. Weiterhin bestehen praktisch keine Limitierungen hinsichtlich der Verfügbarkeit der Ausgangsstoffe, sofern genügend erneuerbare Energien zur Verfügung gestellt werden können.

Zur Vermeidung der Nachteile bei der Verwendung von Ammoniak als Brennstoff kann dieser durch Spaltung in ein Gasgemisch von 75 % Wasserstoff und 25 % Stickstoff umgewandelt werden. Dieses Gemisch kann direkt oder auch in aufbereiteter Form zu Heizzwecken verwendet oder auch als Brennstoff Wärmekraftmaschinen zugeführt werden. Die vorliegende Erfindung beschreibt ein Verfahren zur Umwandlung von Ammoniak in Wasserstoff und Stickstoff, bei dem nur geringe Verluste entstehen.

### Zusammenfassung der Erfindung

Die Spaltungsreaktion von Ammoniak zu Wasserstoff und Stickstoff ist endotherm. Sie erfolgt üblicherweise mit Unterstützung durch einen Spaltkatalysator bei Temperaturen über 400 °C, meist über 600 ° C. Wegen der Endothermie wird zur Aufrechterhaltung der Reaktion eine Energiezufuhr von außen benötigt. Diese Energie wird durch Verbrennung eines Teils des durch die Ammoniakspaltung hergestellten Wasserstoffs erzeugt. Wegen der im Vergleich zur Ammoniakspaltung bei der Wasserstoffverbrennung frei werdenden hohen Energiemengen wird nur ein kleiner Teil des durch die Spaltung erzeugten Wasserstoffs benötigt. Der dazu nicht benötigte Wasserstoff wird dem Verfahren entnommen und weiteren Verwendungen zugeführt. Der ebenfalls gebildete Stickstoff durchläuft als Inertgas den Prozess.

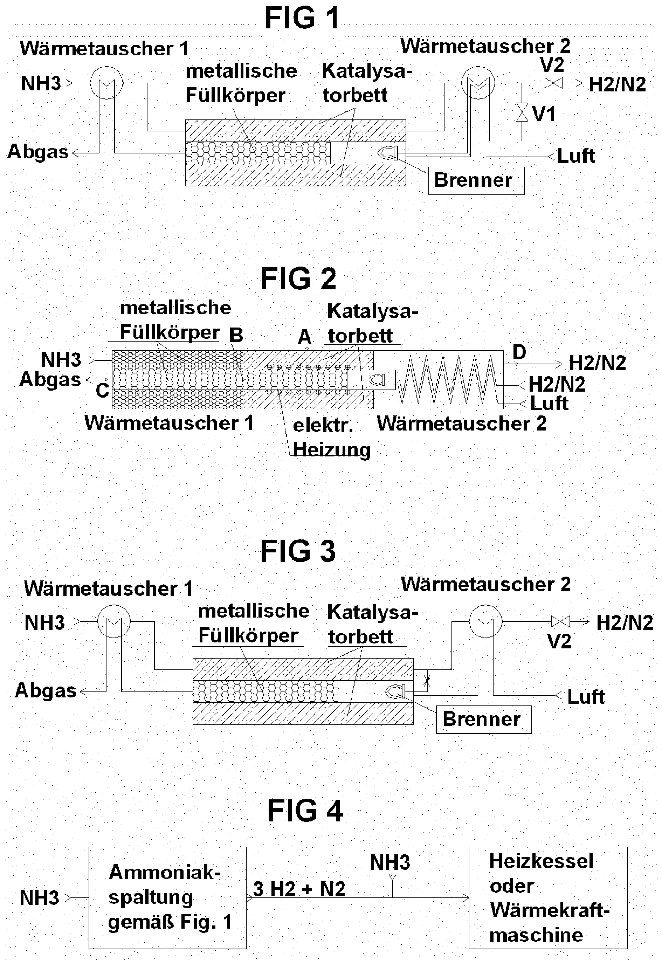

Die Spaltung des Ammoniak erfolgt in einem Reaktor, der durch Verbrennung des Wasserstoffs beheizt wird. Als Oxidationsmittel wird Luft verwendet. Zur weiteren Erläuterung wird auf die Zeichnung Fig. 1 verwiesen.

Als Spaltreaktor wird ein Doppelrohr (Ringspaltreaktor) verwendet, die Beheizung erfolgt durch Verbrennung des Wasserstoffs im Innenrohr. Die Beheizung über das Innenrohr gewährleistet, dass die bei der Verbrennung freigesetzte Wärme annähernd vollständig auf den Ammoniak-Gasstrom übertragen wird. Zweckmäßigerweise erfolgt die Reaktionsführung im Gegenstromverfahren, da in diesem Fall die Wärmeverluste klein gehalten werden. Der Ringspalt zwischen Innen- und Außenrohr wird mit einem üblichen Katalysator zur AmmoniakSpaltung befüllt. Ammoniak wird im Gegenstrom über das Katalysatorbett geleitet. Die Temperatur am Spaltkatalysator liegt üblicherweise oberhalb von 600 °C. Hohe Temperaturen beschleunigen die Spaltung. Alternativ können auch spezielle Katalysatoren eingesetzt werden, die mit niedrigeren Temperaturen auskommen, wodurch die Abwärmeverluste verringert werden können.

Neben dem Doppelrohr-Reaktor können auch andere Reaktorkonstruktionen verwendet werden, wie z.B. RohrbündelReaktoren (mit Verbrennung des Wasserstoffs innerhalb der Rohre) oder auch Plattenreaktoren, jedoch sollte der Verbrennungsraum möglichst vollständig von dem Raum umgeben werden, in dem die Ammoniakspaltung erfolgt, um unnötige Verluste zu vermeiden.

Die Verbrennung des Wasserstoffs erfolgt über eine offene Flamme, alternativ dazu ist die Verbrennung über einen vorzugsweise edelmetallhaltigen Oxidationskatalysator möglich. Der Raum hinter der Flamme ist zur Verbesserung der Wärmeübertragung mit Füllkörpern aus Metall angefüllt. Die Verbrennung erfolgt mit Luft im stöchiometrischen Bereich oder mit einem geringen Luftüberschuß, um den Gasstrom gering zu halten. Damit wird der Wärmeübergang zum Ammoniakgasstrom begünstigt und die Wärmebilanz verbessert.

Zu Verbesserung der Wärmebilanz wird außerdem das Ammoniakgas vor dem Einströmen in den Spaltreaktor über einen Wärmetauscher WT1 mit den abgehenden Verbrennungsabgasen (s. Fig. 1) vorgewärmt. Da die Spaltprodukte den Reaktor mit hohen Temperaturen verlassen, kann die darin enthaltene Energie zur Vorwärmung des dem Brenner zugeführten Wasserstoff-Stickstoff-Gemischs und der Verbrennungsluft genutzt werden (Wärmetauscher WT2). Die Wärmetauscher sowie der Spaltreaktor werden im Gegenstromverfahren betrieben. Das abgekühlte Gasgemisch - bestehend aus Wasserstoff und Stickstoff - wird nach dem Wärmetauscher WT2 in zwei Gasströme aufgeteilt, nämlich in den Produktgasstrom, der weiterverwendet wird, und in den zum Brenner des Spaltreaktors zurückgeführten Gasstrom. Die Aufteilung erfolgt durch Einstellung der entsprechenden Ventile V1 und V2.

Die Anordnung stellt sicher, dass die Verbrennungswärme zu einem hohen Anteil auf den Spaltkatalysator bzw. das Ammoniak übergeht und der Energieinhalt des erhaltenen Produktgasstroms von 75% Wasserstoff und 25% Stickstoff nur geringfügig unter dem des eingesetzten Ammoniaks liegt. Verluste entstehen durch die Restwärme in Brennerabgas und im Produktgasstrom bei verlassen der Wärmetauscher sowie durch die Wärmeabgabe nach aussen von Reaktor und Wärmetauscher, die durch eine entsprechende Isolation zu minimieren ist. Bei geeigneter Auslegung der Anlage beträgt der Energieinhalt des die Gesamtanlage verlassenden Produktgasstroms über 90% des Energieinhaltes des eingesetzten Ammoniakstromes.

Die Erzeugung von Wasserstoff durch Ammoniakspaltung wurde bereits beschrieben, z. B. in den Schriften US 2003/0232224, US 2005/0037244 oder US 2013/0266506. Die Prozessführung sowie die Konstruktion des Reaktors unterscheiden sich von dem hier vorgeschlagenen Verfahren.

Bei US 2005/0037244 oder US 2013/0266506 wird zusätzlich mit einem Oxidationskatalysator sowie der Zugabe von Luft oder Sauerstoff in den Ammoniakgasstrom gearbeitet. Die Zugabe von Luft erleichtert die Aufrechterhaltung einer autothermischen Reaktion ohne weitere Energiezufuhr von aussen, hat aber den Nachteil, dass der Wasserstoffanteil im Produktgasstrom im Vergleich zur hier vorgeschlagenen Verfahrensweise abnimmt. Die Brennbarkeit des Produktgasstroms verschlechtert sich damit, er ist weniger geeignet für die Verwendung in Wärmekraftmaschinen.

US 2003/0232224 und US 2005/0037244 gehen weiterhin von einer Verwendung des Wasserstoffs in einer Brennstoffzelle aus. Daher wird der Konstruktion des Spaltreaktors zum Erhalt eines guten thermodynamischen Wirkungsgrades keine so hohe Bedeutung beigemessen. So erfolgt bei US 2005/0037244 die Beheizung der Katalysatorschüttung von aussen, was die Wärmebilanz verschlechtert und die Isolation zusätzlich belastet. In US 2003/0232224 wird bereits im Abstract darauf hingewiesen, dass der Großteil des erzeugten Wasserstoffs zur Beheizung des Spaltreaktors benötigt wird. So wird dort auch eine Reaktorkonstruktion verwendet, bei der die Stoffströme nicht vollständig im Gegenstrom geführt werden und daher die Energieinhalte des Abgasstromes des/der Brenner bzw. des Produktgasstroms, der den Spaltreaktor verlässt, nicht optimal genutzt werden. Nachteilig für die Wärmebilanz wirkt sich ebenfalls aus, dass der Brenner im mageren Bereich betrieben wird, weil das "Abgas" der Brennstoffzelle mit hohem Stickstoffgehalt als Brennstoff eingesetzt wird. Damit einhergehende niedrigere Flammentemperaturen und größere Gasvolumenströme wirken sich negativ auf die Wärmeübertragung zum Ammoniakstrom aus.

### Seite 6a einfügen

Bei dem hier vorgeschlagenen Verfahren kann hingegen bei vollständiger Wärmerückgewinnung und vollständiger Spaltung des Ammoniaks theoretisch ein Verhältnis zwischen dem die Anlage verlassenen Produktgasstrom und zurückgeführtem Brennergasstrom von fast 7:1 erreicht werden. In den praktischen Beispielen sind je nach Güte der thermischen Isolation und der Qualität der Wärmetauscher Verhältnisse von Produktgasstrom und Brennergasstrom von ca. 4:1 bis 6:1 möglich. Damit einher geht ein energetischer Wirkungsgrad definiert als Verhältnis zwischen Energieinhalt des Produktgasstroms zu Energieinhalt des eingesetzten Ammoniaks von über 90%.

Alternativ dazu kann die Prozessführung auch dadurch erfolgen (s. Fig. 3), dass ein Teil des Spaltgases am Reaktorausgang abgezweigt und über einen Strömungsengpass, z.B. über eine Kapillare oder Lochblende, dem Brenner direkt zugeführt wird. Die Einstellung des Verhältnisses von Produktgasstrom und Brennergasstrom erfolgt dann über die Einstellung des Volumenstroms an Ammoniak sowie über die Einstellung des Ventils V2 am Ausgang des Produktgasstroms.

Diese Prozessführung hat den Vorteil, dass das Brennergas nicht abgekühlt und anschließend nochmals aufgeheizt werden muss, sondern bei der hohen Temperatur des Spaltkatalysatorbettes verbleibt, und daher die Wärmebilanz verbessert wird. Von Nachteil ist die problematischere Einstellung der Gasströme sowie die fehlende Möglichkeit, den Volumenstrom des Brennergases bei niedrigeren Temperaturen über einfache Messeinrichtungen zu bestimmen.

Die US 3 198 604 A offenbart ein Verfahren zur Spaltung von Ammoniak an einem Katalysator, wobei der erzeugte Wasserstoff aus der Reaktionszone teilweise entfernt wird. Ammoniak wird in einem Wärmetauscher erwärmt und dem Spaltungsreaktor zugeführt. Der Spaltungsreaktor ist mit einem Spaltungskatalysator und mit einem Verbrennungskatalysator ausgerüstet. Ein Teil des erzeugten Wasserstoffes wird als Permeat gewonnen. Dieser Teil wird aus dem Raum mit dem Spaltkatalysator über für Wasserstoff durchlässige Separatoren vorzugsweise bestehend aus Palladium oder palladiumhaltigen Legierungen entzogen. Der andere Teil des erzeugten Wasserstoffs verlässt den Reaktor und wird als Brennstoffgas dem Verbrennungskatalysator zurückgeführt. Die Beheizung des Spaltkatalysators erfolgt von außen. Das eingesetzte Ammoniak wird vor dem Eintritt in den Spaltreaktor über den Wärmetauscher mit dem Abgasstrom des Spaltreaktors im Gegenstrom vorgeheizt.

Die EP 2 543 103 A1 beschreibt einen Reaktor für Ammoniakspaltung, der aus vier konzentrisch angeordneten Zylindern besteht und damit vier Reaktionsräume bildet, wobei ein Wärmeübergang durch die Zylinderwand zum jeweils benachbarten Reaktionsraum ermöglicht wird. Die Verbrennungszone mit einem Oxidationskatalysator befindet sich in dem inneren Zylinder. Im äußeren Ringspalt werden die Verbrennungsabgase zur Wärmerückgewinnung zurückgeführt. Die beiden mittleren Ringspalte enthalten den Spaltkatalysator bzw. dienen der Vorwärmung des Ammoniaks. Der Reaktor wird auf eine Weise betrieben, dass ein Wärmetausch zwischen Brenngas/Luft und Brennerabgas und auf der anderen Seite zwischen Stickstoff/Wasserstoff und Ammoniak erfolgt.

Da die Reaktion nicht von allein in Gang kommt, ist der Reaktor mit einer elektrischen Zusatzheizung ausgestattet, mit der das innere Rohr auf eine derartige Temperatur aufgeheizt werden kann, so dass die Spaltung des Ammoniaks in Gang kommt und der Wasserstoff am Brenner zündet. Alternativ kann auch über ein extern eingespeistes brennbares Gas der Reaktor auf die Starttemperatur aufgeheizt werden. Während des stationären Betriebs der Anordnung wird die elektrische Zusatzheizung nicht benötigt.

Der Produktgasstrom aus Wasserstoff und Stickstoff kann einem gewöhnlichen Heizkessel zur Gewinnung von Wärmeenergie zugeführt werden. Die Verbrennung erfolgt entweder über eine offene Flamme oder über einen Oxidationskatalysator. Der Gasstrom kann weiterhin in einer Wärme-Kraft-Maschine genutzt werden.

Da nicht nur Wasserstoff sondern auch Mischungen von Wasserstoff und Ammoniak brennbar sind und damit für die genannten Zwecke eingesetzt werden können, kann eine Leistungssteigerung von Heizkesseln und Wärme-Kraft-Maschinen erreicht werden, wenn dem Produktgasstrom weiteres Ammoniak hinzugemischt wird (siehe Fig. 4).

### Kurze Beschreibung der Zeichnungen

Fig. 1 zeigt ein verfahrenstechnisches Fließbild für den vorgesehenen Prozess zur Ammoniakspaltung.
Fig. 2 stellt ein Ausführungsbeispiel in Form eines Rohrreaktors dar, welcher auch die beiden Wärmetauscher zur Gasvorwärmung beinhaltet.
Fig. 3 zeigt das Fließbild entsprechend Fig. 1, bei dem jedoch das zum Brenner geleitete Wasserstoff-Stickstoff-Gemisch unter Umgehung des Wärmetauschers direkt nach Durchlauf des Katalysatorbettes über eine Drossel dem Brenner zugeführt wird.
Fig. 4 zeigt die Prozessführung bei Erhöhung des Energiedurchsatzes durch zusätzliche Beimischung von Ammoniak zur erzeugten Gasmischung aus Wasserstoff und Stickstoff.

### Detaillierte Beschreibung der Erfindung - Ausführungsbeispiel

Fig. 2 zeigt ein Ausführungsbeispiel in Form eines Rohrreaktors, bestehend aus einem äußeren und inneren Rohr. Die Gesamtanordnung enthält sowohl den eigentlichen Reaktorteil zur Ammoniakspaltung als auch die beiden Wärmetauscher WT1 und WT2. Im Ausführungsbeispiel hat das Außenrohr einen Außendurchmesser von 108 mm, das Innenrohr von 34 mm, bei einer Wandstärke von jeweils 2 mm. Die Gesamtlänge beträgt 3 m, die Länge der drei Baukomponenten WT1 - Reaktor - WT2 jeweils 1 m. Die Innenseite von WT2 bzw. die Zuleitungen für Wasserstoff und Luft zum Brenner bestehen aus jeweils einer Rohrspirale, um unterschiedliche thermische Ausdehnungen von Außen- und Innenrohr des Reaktors kompensieren zu können. Der Katalysator zur Ammoniakspaltung befindet sich im mittleren Teil im Ringspalt. Die Abgasseite des Innenrohres sowie die verbleibenden Räume auf der Ammoniakseite der Konstruktion sind wie in Zeichnung 2 darstellt mit metallischen Füllkörpern zu Verbesserung der Wärmeübertragung angefüllt.

Als Spaltkatalysator wird ein üblicher Katalysator mit Nickel auf Aluminiumoxid oder Magnesiumoxid verwendet. Das Volumen der Katalysatorschüttung beträgt ca. 6 I. Um die Gesamtkonstruktion wird eine Isolationsschicht von 25 cm Dicke angebracht.

Für den Betrieb des Reaktors sind beispielhaft die folgenden Gasdurchsätze genannt. Die Angaben gelten für einen Betrieb im unteren Temperaturbereich des Katalysatorbettes bei relativ niedrigen Ammoniakdurchsätzen. Der Betrieb der Anlage erfolgt bei Atmosphärendruck, ein Betrieb bei erhöhtem Druck ist ebenfalls möglich.

| | |
|---|---|
| Eingangsgasstrom NH3: | 40 l/min |
| Raumgeschwindigkeit am Spaltkatalysator: | ca. 400 /h |
| Brennergasstrom (75% H2+25%N2): | 16 l/min |
| Luftstrom zum Brenner: | 36 l/min |

Im stationären Fall stellen sich folgende Temperaturen ein:

| | | |
|---|---|---|
| T (Punkt A): | 520 °C | |
| T (Punkt B): | 600 °C | |
| T (Punkt C): | 130 °C | (Brennerabgas nach Wärmetauscher) |
| T (Punkt D): | 100 °C | (Produktgas nach Wärmetauscher) |

Der Ammoniakgehalt im Produktgasstrom liegt unter diesen Bedingungen unter 10 %. Definiert man den Wirkungsgrad des gesamten Konverters als das Verhältnis zwischen Energieinhalt des Ausgangsstroms zum Energieinhalt des Ammoniak-Eingangs-Stroms erhält man einen Wert von ca. 90 %, sofern mit der Standardbildungsenthalpie von gasförmigem Wasser gerechnet wird. Für die Wärmeerzeugung in einem Brennwertkessel ergeben sich entsprechend höhere Werte.

## Patentansprüche

1. Beansprucht wird ein Verfahren zur Spaltung von Ammoniak in Stickstoff und Wasserstoff an einem Katalysator, **dadurch gekennzeichnet, dass**
- Ammoniak ohne Zumischung von Luft oder anderen sauerstoffhaltigen Gasen als Ausgangsstoff eingesetzt wird
- der zur Spaltung des Ammoniak erforderliche Energiebedarf durch Verbrennung eines Teils des durch die Spaltung erzeugten Wasserstoff Stickstoff Gemisches mit Luft erzeugt wird, wobei die Verbrennung im inneren der Katalysatorschicht selbst räumlich getrennt vom Katalysator (6) und diesen umgebenden Gasraum erfolgt und die Energie über Wärmetauscherflächen für die Spaltungsreaktion zugeführt wird
- der der Verbrennung zugeführte Teil des Wasserstoff-Stickstoff- Gemisches weniger als 30% des durch die Spaltung erzeugten Wasserstoff-Stickstoff-Gemisches beträgt
- das eingesetzte Ammoniak vor Eintritt in den Spaltreaktor über einen Wärmetauscher (WT1) mit dem Abgasstrom des Spaltreaktors vorgeheizt wird und die der Verbrennungsreaktion bzw. dem Brenner zugeführten Gase, nämlich Wasserstoff-Stickstoff-Gemisch und Luft, über einen Wärmetauscher (WT2) mit dem aus dem Spaltreaktor kommenden Wasserstoff-Stickstoff-Gemisch vorgeheizt werden
- Ammoniak und der Verbrennungsgasstrom im Gegenstrom geführt werden und
- der erhaltene Produktstrom zu Heizzwecken mit Luft als Oxidationsmittel verbrannt oder in einer Wärme-Kraft-Maschine als Brennstoff verwendet wird.

2. Verfahren nach Anspruch 1, bei dem die Verbrennung nicht in offener Flamme sondern mit Hilfe eines Oxidationskatalysators durchgeführt wird.

3. Verfahren nach Anspruch 1, bei dem der für die Verbrennung benötigte Teil des Wasserstoff-Stickstoffgemisches direkt vom Ende des Spaltreaktors ohne Durchlauf eines Wärmetauschers (WT2) über einen Strömungsengpass dem Brenner zugeführt wird.

4. Verfahren nach Anspruch 1, bei dem der erzeugten Wasserstoff Stickstoffmischung vor der Verwendung in einem Heizkessel oder Wärme-Kraft-Maschine weiterer Ammoniak zur Steigerung des Energieinhaltes beigemischt wird.

5. Verfahren nach Anspruch 1, bei dem der Spaltreaktor unter erhöhtem Druck bis zu 40 bar betrieben wird.

## Claims

1. Method for cracking ammonia into nitrogen and hydrogen on a catalyst, **characterized in that**
- ammonia without any admixture of air or other oxygen-containing gases is used as initial material
- the energy demand required to crack the ammonia is produced by burning part of the hydrogen-nitrogen mixture produced by the cracking with air, the combustion taking place in the interior of the catalyst layer itself, physically separated from the catalyst (6) and the gas chamber surrounding the latter, and the energy for the cracking reaction being supplied via heat exchanger surfaces
- the part of the hydrogen-nitrogen mixture supplied to the combustion is less than 30% of the hydrogen-nitrogen mixture produced by the cracking
- before entering the cracking reactor, the ammonia used is pre-heated via a heat exchanger (WT1) by using the waste gas stream from the cracking reactor, and the gases supplied to the combustion reaction or to the burner, specifically hydrogen-nitrogen mixture and air, are pre-heated via a heat exchanger (WT2) by using the hydrogen-nitrogen mixture coming from the cracking reactor
- ammonia and the combustion gas stream are conducted in countercurrent and
- the product stream obtained is burned with air as oxidising agent for heating purposes or is used as fuel in a combined heat and power machine.

2. Method according to Claim 1, in which the combustion is not carried out with a naked flame but with the aid of an oxidation catalyst.

3. Method according to Claim 1, in which the part of the hydrogen-nitrogen mixture needed for the combustion is supplied to the burner directly from the end of the cracking reactor via a flow bottleneck, without passing through a heat exchanger (WT2).

4. Method according to Claim 1, in which the hydrogen-nitrogen mixture produced has further ammonia added to it to increase the energy content before use in a boiler or combined heat and power machine.

5. Method according to Claim 1, in which the cracking reactor is operated under elevated pressure of up to 40 bar.

## Revendications

1. Procédé de craquage d'ammoniac en azote et hydrogène sur un catalyseur,
**caractérisé par le fait que**
- de l'ammoniac est utilisé sans addition d'air ou autres gaz contenant de l'oxygène en tant que matière de départ ;
- le besoin en énergie nécessaire pour le craquage de l'ammoniac est produit par combustion d'une partie du mélange hydrogène-azote produit par le craquage avec de l'air, la combustion ayant lieu au coeur de la couche de catalyseur, séparément du catalyseur (6) et de l'espace de gaz environnant celui-ci, et l'énergie étant fournie pour la réaction de craquage par l'intermédiaire de surfaces d'échangeur de chaleur ;
- la partie du mélange hydrogène-azote fournie à la combustion s'élève à moins de 30 % du mélange hydrogène-azote produit par le craquage ;
- l'ammoniac utilisé est préchauffé par le courant de gaz d'échappement du réacteur de craquage par l'intermédiaire d'un échangeur de chaleur avant l'entrée dans le réacteur de craquage ;
et les gaz fournis à la réaction de combustion ou au brûleur, à savoir le mélange hydrogène-azote et l'air, sont préchauffés par le mélange hydrogène-azote venant du réacteur de craquage par l'intermédiaire d'un échangeur de chaleur ;
- l'ammoniac et le courant de gaz de combustion sont conduits à contre-courant et
- le courant de produit obtenu est brûlé pour les besoins du chauffage avec de l'air en tant qu'agent d'oxydation ou est utilisé en tant que combustible dans une machine thermique.

2. Procédé selon la revendication 1, dans lequel la combustion n'est pas effectuée dans une flamme nue mais à l'aide d'un catalyseur d'oxydation.

3. Procédé selon la revendication 1, dans lequel la partie du mélange hydrogène-azote nécessaire pour la combustion est amenée au brûleur directement de l'extrémité du réacteur de craquage sans passage à travers un échangeur de chaleur (WT₂) par l'intermédiaire d'un goulot d'étranglement de courant.

4. Procédé selon la revendication 1, dans lequel de l'ammoniac supplémentaire est ajouté au mélange hydrogène-azote produit avant l'utilisation dans une chaudière de chauffage ou une machine thermique pour l'augmentation du contenu énergétique.

5. Procédé selon la revendication 1, dans lequel le réacteur de craquage est actionné sous une pression accrue allant jusqu'à 40 bar.
